(19) Europäisches Patentamt
European Patent Office
Office européen des brevets

(11) **EP 4 253 464 B1**

(12) **EUROPEAN PATENT SPECIFICATION**

(45) Date of publication and mention of the grant of the patent:
**05.08.2026 Bulletin 2026/32**

(21) Application number: **21898571.1**

(22) Date of filing: **23.11.2021**

(51) International Patent Classification (IPC):
***C08K 5/12*** $^{(2006.01)}$ ***C08K 5/00*** $^{(2006.01)}$
***C08L 27/06*** $^{(2006.01)}$

(52) Cooperative Patent Classification (CPC):
(C-Sets available)
**C08K 5/12;** C08K 2201/014 (Cont.)

(86) International application number:
**PCT/KR2021/017323**

(87) International publication number:
**WO 2022/114745 (02.06.2022 Gazette 2022/22)**

(54) **ISOPHTHALATE-BASED PLASTICIZER COMPOSITION AND RESIN COMPOSITION COMPRISING SAME**

WEICHMACHERZUSAMMENSETZUNG AUF ISOPHTHALATBASIS UND HARZZUSAMMENSETZUNG DAMIT

COMPOSITION DE PLASTIFIANT À BASE D'ISOPHTALATE ET COMPOSITION DE RÉSINE LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2020 KR 20200158966**

(43) Date of publication of application:
**04.10.2023 Bulletin 2023/40**

(73) Proprietor: **LG Chem, Ltd.**
**Seoul 07336 (KR)**

(72) Inventors:
- **KIM, Hyun Kyu**
  **Daejeon 34122 (KR)**
- **MOON, Jeong Ju**
  **Daejeon 34122 (KR)**
- **KIM, Joo Ho**
  **Daejeon 34122 (KR)**
- **JEONG, Seok Ho**
  **Daejeon 34122 (KR)**
- **KIM, Eun Suk**
  **Daejeon 34122 (KR)**
- **WOO, Seung Taek**
  **Daejeon 34122 (KR)**
- **CHOI, Woo Hyuk**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 0 388 197**
**WO-A1-2020/222500**
**KR-A- 20140 126 648**
**KR-A- 20160 079 065**
**KR-A- 20160 101 880**
**KR-A- 20180 042 308**
**KR-A- 20200 127 890**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/12, C08L 27/06**

## Description

### TECHNICAL FIELD

### [Technical Field]

The present invention relates to a plasticizer composition including isophthalate derived from a mixture alcohol of hexyl alcohol isomers and di(2-ethylhexyl) terephthalate, and a resin composition comprising the same.

### BACKGROUND ART

Generally, plasticizers are obtained through the reaction of alcohols with polycarboxylic acids such as phthalic acid and adipic acid to form corresponding esters. In addition, considering the internal and external regulations on harmful phthalate-based plasticizers to the human body, studies are being continued on plasticizer compositions which may replace phthalate-based plasticizers such as terephthalate-based, adipate-based and other polymer-based plasticizers.

Meanwhile, regardless of the type of industry including plastisol type of industry of flooring materials, wallpaper, soft and hard sheets, etc., calendaring type of industry, or extrusion/injection compound type of industry, the demand for eco-friendly products is increasing. In order to reinforce the quality properties, processability and productivity according to the finished products, an appropriate plasticizer is required considering discoloration, migration, mechanical properties, etc.

According to the properties required by the types of industry in various areas of usage, such as tensile strength, elongation rate, light resistance, migration, gelling properties and absorption rate, supplementary materials such as a plasticizer, a filler, a stabilizer, a viscosity decreasing agent, a dispersant, a defoaming agent and a foaming agent are mixed with a PVC resin.

For example, in case of applying di(2-ethylhexyl) terephthalate (DEHTP) which is relatively cheap and widely used among plasticizer compositions which may be applied to PVC, hardness or sol viscosity is high, absorption rate of a plasticizer is relatively slow, and migration and stress migration are not good.

As improvements on the above limitations, the application of a transesterification product with butanol as a plasticizer, may be considered as a composition including DEHTP. However, in this case, plasticization efficiency is improved, but volatile loss or thermal stability is inferior and mechanical properties are somewhat degraded, and the improvement of physical properties is required, and accordingly, there is no solution but employing a method compensating the defects through mixing with a second plasticizer at the present time.

However, in case of applying the second plasticizer, there are drawbacks of generating unexpected defects as follows: the change of the physical properties is hard to predict, the application may become a factor of increasing the unit cost of the product, the improvement of the physical properties is not clearly shown except for specific cases, and problems relating to compatibility with a resin may arise.

In addition, if a material like tri(2-ethylhexyl) trimellitate or triisononyl trimellitate is applied as a trimellitate-based product in order to improve the inferior migration, loss properties and light resistance of the DEHTP products, migration or loss properties may be improved, but plasticization efficiency may be degraded, and a great deal of the material is required to be injected to provide a resin with suitable plasticization effects, and considering the relatively high unit price of the products, commercialization thereof is impossible.

Also, if a material such as dibutyl terephthalate is mixed as a terephthalate series product, there are problems in that environmental issues may arise including air pollution during processing due to inferior volatile loss, and the use in a greater amount than a certain amount is limited, and the improvement of plasticization efficiency is impossible.

Accordingly, the development of products for solving the environmental issues of the conventional phthalate-based products or products for improving inferior physical properties of the eco-friendly products for improving the environmental issues of the phthalate-based products is required.

EP 0 388 197 A1 discloses a process for making terephthalate esters which can be used as plasticizers. An ester disclosed is bis di-n-hexylterephthalate.

WO 2020/222500 A1 discloses a plasticizer composition, comprising two or more of the same carbon number type isophthalate, which is an isophthalate in which alkyl groups bonded to two ester groups have the same carbon number, and one or more of a different carbon number type isophthalate, which is an isophthalate in which alkyl groups bonded to two ester groups have different carbon numbers.

KR 2016/0101880 A discloses ester mixtures of iso-terephthalates as plasticizer.

KR 2020/0127890 A discloses triesters of cyclohexane tricarboxylic acid as plasticizers.

KR 2018/0042308 A discloses a plasticizer for a vinylchloride resin.

KR 2016/0079065 A discloses a process for producing a carboxylic ester.

KR 2014/0126648 A discloses a plasticizer wherein an isophthalic ester is 1 to 100 wt.-% based on the total

weight of the composition. Di(2-ethylhexyl)isophthalate may be used.

## DISCLOSURE OF THE INVENTION

## TECHNICAL PROBLEM

The present invention provides a plasticizer composition characterized in including a mixture of dihexyl isophthalate having an alkyl group derived from an isomer mixture of hexyl alcohol with di(2-ethylhexyl) terephthalate, and if applied to a resin, tensile strength and elongation rate are improved, and migration resistance is good, while having the same plasticization efficiency.

In addition, the present invention provides a plasticizer composition having low initial sol viscosity, a small change of sol viscosity with the passage of time, and excellent viscosity stability.

## TECHNICAL SOLUTION

To solve the tasks, the present invention provides a plasticizer composition.

(1) The present invention provides a plasticizer composition comprising dihexyl isophthalate and di(2-ethylhexyl) terephthalate, wherein a hexyl group of the dihexyl isophthalate is derived from an isomer mixture of hexyl alcohol, and the isomer mixture of hexyl alcohol comprises two or more selected from the group consisting of 1-hexanol, 1-methylpentanol, 2-methylpentanol, 3-methylpentanol, 4-methylpentanol, 1,1-dimethylbutanol, 1,2-dimethylbutanol, 1,3-dimethylbutanol, 2,2-dimethylbutanol, 2,3-dimethylbutanol, 3,3-dimethylbutanol, 1-ethylbutanol, 2-ethylbutanol, 3-ethylbutanol and cyclopentyl methanol.

(2) The present invention provides the plasticizer composition of (1) above, wherein the isomer mixture of hexyl alcohol comprises 1-hexanol and 2-methylpentanol.

(3) The present invention provides the plasticizer composition of (1) or (2) above, wherein the isomer mixture of hexyl alcohol comprises 40 parts by weight or more of a branch type alcohol based on 100 parts by weight of the isomer mixture.

(4) The present invention provides the plasticizer composition of any one of (1) to (3) above, wherein the isomer mixture of hexyl alcohol comprises 50 to 95 parts by weight of a branch type alcohol based on 100 parts by weight of the isomer mixture.

(5) The present invention provides the plasticizer composition of any one of (1) to (4) above, wherein the isomer mixture of hexyl alcohol comprises 40 parts by weight or less of 1-hexanol based on 100 parts by weight of the isomer mixture.

(6) The present invention provides the plasticizer composition of any one of (1) to (5) above, wherein a weight ratio of the dihexyl isophthalate and the di(2-ethylhexyl) terephthalate is 90:10 to 10:90.

(7) The present invention provides the plasticizer composition of any one of (1) to (6) above, wherein the isomer mixture of hexyl alcohol comprises 1-hexanol, 2-methylpentanol and 3-methylpentanol.

(8) The present invention provides a resin composition comprising 100 parts by weight of a resin and 5 to 150 parts by weight of the plasticizer composition according to any one of (1) to (7) above, wherein the resin is one or more selected from the group consisting of a straight vinyl chloride polymer and a paste vinyl chloride polymer.

## ADVANTAGEOUS EFFECTS

The plasticizer composition according to an embodiment of the present invention, if used in a resin composition, may have the same plasticization efficiency, improved tensile strength and elongation rate, and good migration resistance.

In addition, the plasticizer composition according to the present invention may have low initial sol viscosity, a small change of sol viscosity with the passage of time, and excellent viscosity stability.

## MODE FOR CARRYING OUT THE INVENTION

### Definition of terms

The term "composition" as used in the present disclosure includes a reaction product and a decomposition product formed from the materials of a corresponding composition as well as a mixture of materials including the corresponding composition.

The term "straight vinyl chloride polymer" as used in the present disclosure may mean one type of vinyl chloride polymers polymerized by suspension polymerization, bulk polymerization, etc., and may refer to a polymer having a

porous particle shape in which a large number of pores having a size of tens to hundreds of micrometers are dispersed, no cohesiveness, and excellent flowability.

The term "paste vinyl chloride polymer" as used in the present disclosure may mean one type of vinyl chloride polymers polymerized by microsuspension polymerization, microseed polymerization, emulsion polymerization, etc., and may refer to a polymer having a minute and dense particle shape without pores and with a size of tens to thousands of nanometers, and a polymer having cohesiveness and inferior flowability.

## Measurement methods

In the present disclosure, the content analysis of the components in a composition is conducted by gas chromatography measurement using a gas chromatography equipment of Agilent Co. (product name: Agilent 7890 GC, column: HP-5, carrier gas: helium (flow rate of 2.4 ml/min), detector: F.I.D., injection volume: 1 μl, initial value: 70°C/4,2 min, end value: 280°C/7.8 min, program rate: 15°C/min).

In the present disclosure, "hardness" means Shore hardness (Shore "A" and/or Shore "D") at 25°C and is measured in conditions of 3T 10s using ASTM D2240. The hardness may be an index for evaluating plasticization efficiency, and the lower the value is, the better the plasticization efficiency is.

In the present disclosure, "tensile strength" is obtained according to an ASTM D638 method by drawing a specimen in a cross head speed of 200 mm/min (1T) using a test apparatus of U.T.M (manufacturer: Instron, model name: 4466), measuring a point where the specimen is cut, and calculating according to Mathematical Equation 1 below.

Tensile strength (kgf/cm$^2$) = load value (kgf)/thickness (cm) $\times$ width (cm) [Mathematical Equation 1]

In the present disclosure, "elongation rate" is obtained according to an ASTM D638 method by drawing a specimen in a cross head speed of 200 mm/min (1T) using the U.T.M, measuring a point where the specimen is cut, and calculating according to Mathematical Equation 2 below.

Elongation rate (%) = length after elongation/initial length $\times$ 100 [Mathematical Equation 2]

In the present disclosure, "migration loss" is obtained according to KSM-3156, by which a specimen with a thickness of 2 mm or more is obtained, glass plates are attached onto both sides of the specimen and a load of 1 kgf/cm$^2$ is applied. The specimen is stood in a hot air circulation type oven (80°C) for 72 hours, then taken out therefrom and cooled at room temperature for 4 hours. Then, the glass plates attached onto both sides of the specimen are removed, the weights before and after standing the glass plates and a specimen plate in the oven are measured, and the migration loss is calculated according to Mathematical Equation 3 below.

Migration loss (%) = {[(weight of initial specimen) - (weight of specimen after standing in oven)]/(weight of initial specimen) } $\times$ 100 [Mathematical Equation 3]

In the present disclosure, "volatile loss" is obtained by processing a specimen at 80°C for 72 hours and then, measuring the weight of the specimen.

Volatile loss (%) = {[ (weight of initial specimen) - (weight of specimen after processing)]/(weight of initial specimen) } $\times$ 100 [Mathematical Equation 4]

In cases of the various measurement conditions, the details of the conditions of the temperature, the speed of revolution, the time, etc., may be somewhat changed according to situations, and if the conditions are different, a measurement method and its conditions will be indicated separately.

Hereinafter, the present invention will be explained in more detail to assist the understanding of the present invention.

According to the present invention, the plasticizer composition is characterized in including dihexyl isophthalate and di(2-ethylhexyl) terephthalate, and the hexyl group of the dihexyl isophthalate is derived from an isomer mixture of hexyl alcohol.

According to the present invention, the isomer mixture of hexyl alcohol of the plasticizer composition includes two or more selected from the group consisting of 1-hexanol, 1-methylpentanol, 2-methylpentanol, 3-methylpentanol, 4-methylpentanol, 1,1-dimethylbutanol, 1,2-dimethylbutanol, 1,3-dimethylbutanol, 2,2-dimethylbutanol, 2,3-dimethylbutanol, 3,3-dimethylbutanol, 1-ethylbutanol, 2-ethylbutanol, 3-ethylbutanol and cyclopentyl methanol.

According to the alcohol included in such isomer mixture of hexyl alcohol, the alkyl group of the dihexyl isophthalate may be determined, and in a final composition, various compositions may be included, wherein two or one isomer alkyl groups of the hexyl alcohol are bonded or not, to two alkyl groups, and the component ratio in the final composition may be determined according to the component ratio of reacting alcohols.

As described above, in the application of isophthalate as the component of a plasticizer, if an alcohol having 6 carbon atoms is used, a suitable absorption rate may be secured in contrast to an alcohol having less than 6 carbon atoms, the improvement of processability may be achieved, and tensile strength, elongation rate and volatile loss may be largely improved, and in contrast to an alcohol having greater than 6 carbon atoms, plasticization efficiency may be excellent, and migration resistance and stress resistance may be expected much.

The isomer mixture of hexyl alcohol of the plasticizer composition according to an embodiment of the present invention has the degree of branching of 2.0 or less, preferably, 1.5 or less. Particularly, the degree of branching may be 1.5 or less, 1.3 or less, more preferably, 1.1 or less. In addition, the degree of branching may be 0.1 or more, 0.2 or more, 0.3 or more, most preferably, 0.7 or more. The degree of branching of the isomer mixture of hexyl alcohol may be maintained even after being transformed into dihexyl isophthalate through esterification reaction. If the degree of branching is greater than 2.0, balance among physical properties may be broken, and defects falling short of one or more evaluation levels of a product may arise, but within a preferable range of 1.5 or less, the improvement of migration loss and volatile loss as well as mechanical properties may be optimized, and balance among physical properties may be excellent.

Here, the degree of branching may mean that how many branch carbon atoms do the alkyl groups bonded to a material included in the composition have, and may be determined according to the weight ratio of the corresponding material. For example, if 60 wt% of n-hexyl alcohol, 30 wt% of methylpentyl alcohol and 10 wt% of ethylbutyl alcohol are included in an alcohol mixture, the branch carbon numbers of the alcohols are 0, 1 and 2, respectively, and the degree of branching may be calculated by [(60x0)+(30x1)+(10x2)]/100, and may be 0.5. Here, the branch carbon number of cyclopentyl methanol is regarded 0.

The plasticizer composition according to an embodiment of the present invention may include 1-hexanol and 2-methylpentanol in the isomer mixture of hexyl alcohol, and in this case, excellent effects could be obtained in view of migration resistance and volatile loss.

The branch type hexyl alcohol including 2-methylpentanol may be included in 30 parts by weight or more, 40 parts by weight or more, 50 parts by weight or more, preferably, 60 parts by weight or more, 70 parts by weight or more based on 100 parts by weight of the isomer mixture. The amount of the branch type may be the total in the maximum amount, 99 parts by weight or less, 98 parts by weight or less, preferably, 95 parts by weight or less, or 90 parts by weight or less. With the branch type hexyl alcohol in the range, the improvement of mechanical properties may be expected.

In addition, the linear alcohol of 1-hexanol may be included in 50 parts by weight or less, 40 parts by weight or less, preferably, 30 parts by less based on 100 parts by weight of the isomer mixture. The 1-hexanol may not be present in the component but may be included at least 2 parts by weight or more, and in this case, advantages of maintaining the balance among physical properties and improving mechanical properties may be obtained.

The plasticizer composition according to an embodiment of the present invention may include 1-hexanol, 2-methylpentanol and 3-methylpentanol in the isomer mixture of hexyl alcohol, and may further improve volatile loss while maintaining balance among physical properties by further including 3-methylpentanol. In this case, the 3-methylpentanol may be included as the component of the branch type hexyl alcohol to be present to meet the content of the branch type hexyl alcohol.

More preferably, the isomer mixture of hexyl alcohol may further include cyclopentyl methanol, and through this, effects of compensating migration resistance and stress migration may be expected.

In this case, the cyclopentyl methanol may be each independently 20 parts by weight or less, preferably, 15 parts by weight or less, more preferably, 10 parts by weight or less based on 100 parts by weight of the isomer mixture, or may not be present, but the minimum amount for achieving effects thereby may be 2 parts by weight.

Particularly, due to the features on the ratio degree of the presence of branch type alkyl groups among total alkyl radicals in a final composition, further, on the ratio degree of the presence of a specific branched alkyl radicals among the branch type alkyl groups, plasticization efficiency and the balance of physical properties of migration/loss properties may be controlled, mechanical properties such as tensile strength and elongation rate and stress resistance may be maintained to the same or better levels. In addition, due to the interaction among dihexyl isophthalates having various types of alkyl in the composition, prominent viscosity properties may be achieved, and this could be achieved from the components of the aforementioned hexyl alcohol isomers and the component ratio thereof.

Through this, products which may eliminate environmental issues of the conventional phthalate-based products and further improve loss properties may be accomplished, the migration and loss properties of the conventional terephthalate-based products may be markedly improved, and products having significantly improved mechanical properties in contrast to the conventional commercial products may be achieved.

The dihexyl isophthalate according to an embodiment of the present invention is characterized in being mixed with di(2-ethylhexyl) terephthalate to be applied as a plasticizer. The di(2-ethylhexyl) terephthalate is mixed with the

dihexyl isophthalate and used, and the mechanical properties and thermal stability of the dihexyl isophthalate may be complemented. Meanwhile, if dihexyl phthalate is used instead of the dihexyl isophthalate, though this is not a material regulated by environmental issues, environmental problems are potentially included, and there are many restrictions on use, and the phthalate shows very inferior mechanical properties such as tensile strength and elongation rate, and shows a very low level of plasticization efficiency in contrast to the isophthalate, and the case of using the dihexyl phthalate is unsuitable.

The plasticizer composition according to an embodiment of the present invention is characterized in mixing dihexyl isophthalate having the aforementioned characteristics and di(2-ethylhexyl) terephthalate. In this case, a mixing weight ratio may be 90:10 to 10:90, and other various weight ratios may be applied. As upper limits, 85:15, 80:20, 75:25, 70:30, 65:35 or 60:40 may be applied, and as lower limits, 15:85, 20:80, 25:75, 30:70, 35:65, 40:60 or 50:50 may be applied. If dihexyl isophthalate and di(2-ethylhexyl) terephthalate are mixed and used within the aforementioned weight ratio range, the balance among overall physical properties may be maintained excellent without showing any extremely inferior feature. Particularly, in the plasticizer composition according to an embodiment of the present invention, if di(2-ethylhexyl) terephthalate is included in an equal or greater amount than dihexyl isophthalate, it could be particularly advantageous in view of mechanical properties and volatile loss.

A method of preparing the plasticizer composition according to an embodiment of the present invention is a method well-known in the art, and any methods that may prepare the aforementioned plasticizer composition may be applied without specific limitation.

First, in the case of the dihexyl isophthalate, the composition may be prepared by, for example, direct esterification reaction of isophthalic acid or the anhydride thereof, with the isomer mixture of hexyl alcohol, or the composition may be prepared by transesterification reaction of isophthalate and the isomer mixture of hexyl alcohol.

The plasticizer composition according to an embodiment of the present invention is a material prepared by performing the esterification reaction suitably, and the preparation method is not specifically limited as long as the above-described conditions are satisfied, particularly, the ratio of a branch type alcohol in the isomer mixture alcohol is controlled, and a specific component is included.

For example, the direct esterification may be performed through a step of injecting isophthalic acid or the derivatives thereof, and a mixture alcohol of two or more types, adding a catalyst and reacting under a nitrogen atmosphere; a step of removing unreacted raw materials; a step of neutralizing (or deactivating) unreacted raw materials and the catalyst; and a step of removing (for example, distillation under a reduced pressure) impurities and filtering.

The components of the isomer mixture of hexyl alcohol and the weight ratio of the components are the same as described above. The isomer mixture of the alcohol may be used in a range of 200 to 900 mol%, 200 to 700 mol%, 200 to 600 mol%, 250 to 500 mol%, or 270 to 400 mol% based on 100 mol% of an acid, and by controlling the amount of the alcohol, the component ratio in a final composition may be controlled.

The catalyst may be, for example, one or more selected from an acid catalyst such as sulfuric acid, hydrochloric acid, phosphoric acid, nitric acid, paratoluenesulfonic acid, methanesulfonic acid, ethanesulfonic acid, propanesulfonic acid, butanesulfonic acid, and alkyl sulfate, a metal salt such as aluminum lactate, lithium fluoride, potassium chloride, cesium chloride, calcium chloride, iron chloride, and aluminum phosphate, a metal oxide such as a heteropoly acid, natural/synthetic zeolites, cation and anion exchange resins, and an organometal such as tetraalkyl titanate and polymers thereof. The catalyst may use tetraalkyl titanate. Preferably, as an acid catalyst having a low activation temperature, paratoluenesulfonic acid and methanesulfonic acid may be suitable.

The amount used of the catalyst may be different according to the types thereof, and for example, a homogeneous catalyst may be used in an amount of 0.01 to 5 wt%, 0.01 to 3 wt%, 1 to 5 wt% or 2 to 4 wt% based on total 100 wt% of reactants, and a heterogeneous catalyst may be used in an amount of 5 to 200 wt%, 5 to 100 wt%, 20 to 200 wt%, or 20 to 150 wt% based on the total amount of the reactants.

In this case, the reaction temperature may be within a range of 100°C to 280°C, 100°C to 250°C, or 120°C to 230°C.

The transesterification reaction may be reaction of isophthalate with an alcohol having an alkyl radical different from the alkyl radical of the isophthalate. Here, the alkyl groups of the isophthalate and the alcohol may be exchanged.

The "transesterification reaction" means the reaction of an alcohol and an ester to exchange the alkyl of the ester and the alkyl of the alcohol, as shown in Reaction 1 below.

[Reaction 1]

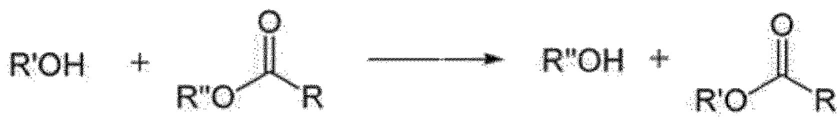

The composition ratio of the mixture prepared through the transesterification reaction may be controlled according to the amount added of the alcohol. The amount added of the alcohol may be 0.1 to 200 parts by weight, particularly, 1 to 150 parts by weight, more particularly, 5 to 100 parts by weight based on 100 parts by weight of the isophthalate. For reference, the factor determining the component ratios in a final composition may be the amount added of the alcohol as in the direct esterification.

The transesterification reaction may be performed at a reaction temperature of 120°C to 190°C, preferably, 135°C to 180°C, more preferably, 141°C to 179°C for 10 minutes to 10 hours, preferably, 30 minutes to 8 hours, more preferably, 1 to 6 hours. Within the temperature and time ranges, the component ratio of a final plasticizer composition may be efficiently controlled. In this case, the reaction time may be calculated from a point where the reaction temperature is achieved after elevating the temperature of the reactants.

The transesterification reaction may be performed under an acid catalyst or a metal catalyst, and in this case, effects of decreasing the reaction time may be achieved.

The acid catalyst may include, for example, sulfuric acid, methanesulfonic acid or p-toluenesulfonic acid, and the metal catalyst may include, for example, an organometal catalyst, a metal oxide catalyst, a metal salt catalyst, or a metal itself.

The metal component may be, for example, any one selected from the group consisting of tin, titanium and zirconium, or a mixture of two or more thereof.

Di(2-ethylhexyl) terephthalate may be prepared by the same method as described above, and the plasticizer composition according to an embodiment may be prepared by mixing two components of dihexyl isophthalate and di(2-ethylhexyl) terephthalate in the aforementioned weight ratio.

According to another embodiment of the present invention, a resin composition including the aforementioned plasticizer composition and a resin is provided, wherein the resin is one or more selected from the group consisting of a straight vinyl chloride polymer and a paste vinyl chloride polymer.

The plasticizer composition may be included in 5 to 150 parts by weight, preferably, 5 to 130 parts by weight, or 10 to 120 parts by weight based on 100 parts by weight of the resin.

Generally, the resin using the plasticizer composition may be prepared into a resin product through a melt processing or a plastisol processing, and a resin by the melt processing and a resin by the plastisol processing may be produced differently according to each polymerization method.

For example, in case of using a vinyl chloride polymer in a melt processing, solid phase resin particles having a large average particle diameter are prepared by suspension polymerization, or the like and used, and the vinyl chloride polymer is referred to as a straight vinyl chloride polymer. In case of using a vinyl chloride polymer in a plastisol processing, a sol state resin as minute resin particles is prepared by emulsion polymerization, or the like and used, and this vinyl chloride polymer is referred to as a paste vinyl chloride resin.

In this case, in case of the straight vinyl chloride polymer, a plasticizer may preferably be included in a range of 5 to 80 parts by weight based on 100 parts by weight of the polymer, and in case of the paste vinyl chloride polymer, the plasticizer may be included in a range of 40 to 120 parts by weight based on 100 parts by weight of the polymer.

The resin composition may further include a filler. The filler may be 0 to 300 parts by weight, preferably, 50 to 200 parts by weight, more preferably, 100 to 200 parts by weight based on 100 parts by weight of the resin.

The filler may use fillers well-known in the art and is not specifically limited. For example, the filler may be a mixture of one or more types selected from silica, magnesium carbonate, calcium carbonate, hard coal, talc, magnesium hydroxide, titanium dioxide, magnesium oxide, calcium hydroxide, aluminum hydroxide, aluminum silicate, magnesium silicate and barium sulfate.

In addition, the resin composition may further include other additives such as a stabilizer as necessary. Each of the other additives such as the stabilizer may be, for example, 0 to 20 parts by weight, preferably, 1 to 15 parts by weight based on 100 parts by weight of the resin.

The stabilizer may use, for example a calcium-zinc-based (Ca-Zn-based) stabilizer such as a composite stearate of calcium-zinc or barium-zinc-based(Ba-Zn-based) stabilizer, but is not specifically limited thereto.

The resin composition may be applied to both a melt processing and a plastisol processing as described above, and a calendaring processing, an extrusion processing, or an injection processing may be applied to the melt processing, and a coating processing, or the like may be applied to the plastisol processing.

## Examples

Hereinafter, embodiments will be explained in detail to particularly explain the present invention.

### Preparation Example 1-1

To a four-neck, 3 liter reactor equipped with a cooler, a condenser, a decanter, a reflux pump, a temperature

controller and a stirrer, 516.5 g of isophthalic acid, 1,170 g of hexanol (mixed hexanol of n-hexanol and 2-methylpentanol in a weight ratio of 1:9) and 1.55 g of tetraisopropyl titanate as a catalyst were injected, the reaction temperature was set to 230°C, and direct esterification reaction was performed for about 6 hours while continuously injecting a nitrogen gas. The reaction was finished at a point where an acid value reached 0.1.

After finishing the reaction, extractive distillation was performed under a reduced pressure to remove unreacted raw materials. After the extractive distillation, a neutralization process, a dehydration process and a filtering process were performed to obtain a composition including di(n-hexyl) isophthalate (DnHIP), (n-hexyl) (2-methylpentyl) isophthalate (nH2MPIP) and di(2-methylpentyl) isophthalate (D2MPIP).

**Preparation Example 1-2**

A composition including di(n-hexyl) isophthalate (DnHIP), (n-hexyl) (2-methylpentyl) isophthalate (nH2MPIP) and di(2-methylpentyl) isophthalate (D2MPIP) was obtained by performing the same method as in Preparation Example 1-1 except for using 1,170 g of a mixed mixture of n-hexanol and 2-methylpentanol in a weight ratio of 7:3 as the hexanol.

**Preparation Example 1-3**

A composition including di(n-hexyl) isophthalate (DnHIP), (n-hexyl) (2-methylpentyl) isophthalate (nH2MPIP) and di(2-methylpentyl) isophthalate (D2MPIP) was obtained by performing the same method as in Preparation Example 1-1 except for using 1,170 g of a mixed mixture of n-hexanol and 2-methylpentanol in a weight ratio of 9:1 as the hexanol.

**Preparation Example 1-4**

A composition was obtained by performing the same method as in Preparation Example 1-1 except for using 1,170 g of a mixed mixture of n-hexanol, 2-methylpentanol and 3-methylpentanol in a weight ratio of 2:3:5 as the hexanol.

**Preparation Example 1-5**

A composition was obtained by performing the same method as in Preparation Example 1-1 except for using 1,170 g of a mixed mixture of n-hexanol, 2-methylpentanol, 3-methylpentanol and cyclopentyl methanol in a weight ratio of 7:37:44:12 as the hexanol.

**Preparation Example 2**

To a four-neck, 3 liter reactor equipped with a cooler, a condenser, a decanter, a reflux pump, a temperature controller and a stirrer, 516.5 g of terephthalic acid, 1,170 g of 2-ethylhexanol and 1.55 g of tetraisopropyl titanate as a catalyst were injected, the reaction temperature was set to 230°C, and direct esterification reaction was performed for about 6 hours while continuously injecting a nitrogen gas. The reaction was finished at a point where an acid value reached 0.1.

After finishing the reaction, extractive distillation was performed under a reduced pressure to remove unreacted raw materials. After the extractive distillation, a neutralization process, a dehydration process and a filtering process were performed to obtain di(2-ethylhexyl) terephthalate (DnHTP).

**Preparation Example 3**

A composition including di(2-methylpentyl) isophthalate (D2MPIP) was obtained by performing the same method as in Preparation Example 1-1 except for using 1,170 g of 2-methylpentanol as the hexanol.

**Preparation Example 4**

A composition including dibutyl isophthalate (DBIP) was obtained by performing the same method as in Preparation Example 1-1 except for using 1,170 g of n-butanol instead of the hexanol.

**Preparation Example 5**

A composition including diheptyl terephthalate (DHpTP) was obtained by performing the same method as in Preparation Example 2 except for using 1,170 g of n-heptanol instead of the hexanol.

The types of the alcohols and acids used in Preparation Examples 1-1 to 1-5 and 2 to 5 are summarized in Table 1

below.

[Table 1]

| Division | Alcohol types and weight ratio | Acid |
|---|---|---|
| Preparation Example 1-1 | n-hexanol:2-methylpentanol = 1:9 | Isophthalic acid |
| Preparation Example 1-2 | n-hexanol:2-methylpentanol = 7:3 | Isophthalic acid |
| Preparation Example 1-3 | n-hexanol:2-methylpentanol = 9:1 | Isophthalic acid |
| Preparation Example 1-4 | n-hexanol:2-methylpentanol:3-methylpentanol = 2:3:5 | Isophthalic acid |
| Preparation Example 1-5 | n-hexanol:2-methylpentanol:3-methylpentanol:cyclopentyl methanol = 7:37:44:12 | Isophthalic acid |
| Preparation Example 2 | 2-ethylhexanol | Terephthalic acid |
| Preparation Example 3 | 2-methylpentanol | Isophthalic acid |
| Preparation Example 4 | n-butanol | Isophthalic acid |
| Preparation Example 5 | n-heptanol | Terephthalic acid |

**Example 1-1**

The dihexyl isophthalate (mixture) of Preparation Example 1-1 and the di(2-ethylhexyl) terephthalate of Preparation Example 2 were mixed in a weight ratio of 1:9 to obtain a plasticizer composition.

**Example 1-2**

The dihexyl isophthalate (mixture) of Preparation Example 1-1 and the di(2-ethylhexyl) terephthalate of Preparation Example 2 were mixed in a weight ratio of 2:8 to obtain a plasticizer composition.

**Example 1-3**

The dihexyl isophthalate (mixture) of Preparation Example 1-1 and the di(2-ethylhexyl) terephthalate of Preparation Example 2 were mixed in a weight ratio of 3:7 to obtain a plasticizer composition.

**Example 1-4**

The dihexyl isophthalate (mixture) of Preparation Example 1-1 and the di(2-ethylhexyl) terephthalate of Preparation Example 2 were mixed in a weight ratio of 5:5 to obtain a plasticizer composition.

**Example 1-5**

The dihexyl isophthalate (mixture) of Preparation Example 1-1 and the di(2-ethylhexyl) terephthalate of Preparation Example 2 were mixed in a weight ratio of 7:3 to obtain a plasticizer composition.

**Example 2-1**

The dihexyl isophthalate (mixture) of Preparation Example 1-2 and the di(2-ethylhexyl) terephthalate of Preparation Example 2 were mixed in a weight ratio of 3:7 to obtain a plasticizer composition.

**Example 2-2**

The dihexyl isophthalate (mixture) of Preparation Example 1-3 and the di(2-ethylhexyl) terephthalate of Preparation Example 2 were mixed in a weight ratio of 3:7 to obtain a plasticizer composition.

**Example 2-3**

The dihexyl isophthalate (mixture) of Preparation Example 1-4 and the di(2-ethylhexyl) terephthalate of

Preparation Example 2 were mixed in a weight ratio of 3:7 to obtain a plasticizer composition.

**Example 2-4**

The dihexyl isophthalate (mixture) of Preparation Example 1-5 and the di(2-ethylhexyl) terephthalate of Preparation Example 2 were mixed in a weight ratio of 3:7 to obtain a plasticizer composition.

**Comparative Example 1**

Dioctyl phthalate (DOP), a product of LG Chem, was used as a plasticizer composition.

**Comparative Example 2**

Diisononyl phthalate (DINP), a product of LG Chem, was used as a plasticizer composition.

**Comparative Example 3**

Di(2-ethylhexyl) terephthalate (DEHTP, LGflex GL300), a product of LG Chem, was used as a plasticizer composition.

**Comparative Example 4**

A mixture (LGflex GL500) of di(2-ethylhexyl) terephthalate (DEHTP), butyl(2-ethylhexyl) terephthalate (BEHTP) and dibutyl terephthalate (DBTP), a product of LG Chem, was used as a plasticizer composition.

**Comparative Example 5**

The composition of Preparation Example 1-1 was used alone.

**Comparative Example 6**

The di(2-methylpentyl) isophthalate (D2MPIP) of Preparation Example 3 and the di(2-ethylhexyl) terephthalate of Preparation Example 2 were mixed in a weight ratio of 5:5 to obtain a plasticizer composition.

**Comparative Example 7**

The dibutyl isophthalate of Preparation Example 4 and the di (2-ethylhexyl) terephthalate of Preparation Example 2 were mixed in a weight ratio of 3:7 to obtain a plasticizer composition.

**Comparative Example 8**

The dihexyl isophthalate (mixture) of Preparation Example 1-1 and the diheptyl terephthalate (DHpTP) of Preparation Example 5 were mixed in a weight ratio of 5:5 to obtain a plasticizer composition.

The components and the weight ratios among them of the plasticizer compositions prepared in the Examples and the Comparative Examples are summarized in Table 2 below.

[Table 2]

| Division | | Component 1 | Component 2 | Component 1:Component 2 (weight ratio) |
|---|---|---|---|---|
| Group 1 | Example 1-1 | Preparation Example 1-1 | Preparation Example 2 | 1:9 |
| | Example 1-2 | Preparation Example 1-1 | Preparation Example 2 | 2:8 |
| | Example 1-3 | Preparation Example 1-1 | Preparation Example 2 | 3:7 |
| | Example 1-4 | Preparation Example 1-1 | Preparation Example 2 | 5:5 |
| | Example 1-5 | Preparation Example 1-1 | Preparation Example 2 | 7:3 |

(continued)

| Division | | Component 1 | Component 2 | Component 1:Component 2 (weight ratio) |
|---|---|---|---|---|
| Group 2 | Example 2-1 | Preparation Example 1-2 | Preparation Example 2 | 3:7 |
| | Example 2-2 | Preparation Example 1-3 | Preparation Example 2 | 3:7 |
| | Example 2-3 | Preparation Example 1-4 | Preparation Example 2 | 3:7 |
| | Example 2-4 | Preparation Example 1-5 | Preparation Example 2 | 3:7 |
| Comparative Example 1 | | DOP used alone | | |
| Comparative Example 2 | | DINP used alone | | |
| Comparative Example 3 | | DEHTP (Preparation Example 2) used alone | | |
| Comparative Example 4 | | A mixture of DEHTP, BEHTP and DBTP was used | | |
| Comparative Example 5 | | Preparation Example 1-1 used alone | | |
| Comparative Example 6 | | Preparation Example 3 | Preparation Example 2 | 5:5 |
| Comparative Example 7 | | Preparation Example 4 | Preparation Example 2 | 3:7 |
| Comparative Example 8 | | Preparation Example 1-1 | Preparation Example 5 | 5:5 |

**Experimental Example 1: Evaluation of sheet performance**

By using the plasticizers of the Examples and the Comparative Examples, specimens were manufactured according to ASTM D638 and the prescription and manufacturing conditions below.

**(1) Prescription:** 100 parts by weight of a straight vinyl chloride polymer (LS100), 50 parts by weight of a plasticizer and 3 parts by weight of a stabilizer (BZ-153T)
**(2) Mixing:** mixing at 98°C in 700 rpm
**(3) Manufacture of specimen:** 1T, 2T and 3T sheets were manufactured by processing at 160°C for 4 minutes by a roll mill, and at 180°C for 2.5 minutes (low pressure) and 2 minutes (high pressure) by a press
**(4) Test items**

1) Hardness: Shore hardness (Shore "A" and "D") at 25°C was measured using a 3T specimen for 10 seconds using ASTM D2240. The plasticization efficiency was assessed excellent if the value was small.
2) Tensile strength: By an ASTM D638 method, a specimen was drawn in a cross-head speed of 200 mm/min using a test apparatus of U.T.M (manufacturer: Instron, model name: 4466), and a point where the 1T specimen was cut was measured. The tensile strength was calculated as follows.

Tensile strength (kgf/cm$^2$) = load value (kgf)/thickness (cm) × width (cm)

3) Elongation rate measurement: By an ASTM D638 method, a specimen was drawn in a cross-head speed of 200 mm/min using a test apparatus of U.T.M, and a point where the 1T specimen was cut was measured. The elongation rate was calculated as follows.

Elongation rate (%) = length after elongation/initial length × 100

4) Migration loss measurement: According to KSM-3156, a specimen with a thickness of 2 mm or more was obtained, glass plates were attached onto both sides of the 1T specimen, and a load of 1 kgf/cm$^2$ was applied. The specimen was stood in a hot air circulation type oven (80°C) for 72 hours and then taken out and cooled at room temperature for 4 hours. Then, the glass plates attached onto both sides thereof were removed, the weights of the specimen before and after standing the glass plates and a specimen plate in the oven, were measured, and the migration loss was calculated as follows.

Migration loss (%) = {[(initial weight of specimen at room temperature) - (weight of specimen after standing in oven)]/(initial weight of specimen at room temperature)} × 100

5) Volatile loss measurement: The specimen manufactured was processed at 80°C for 72 hours, and then, the weight of the specimen was measured.

Volatile loss (%) = {[(weight of initial specimen) - (weight of specimen after processing)]/(weight of initial specimen) } $\times$ 100

**(5) Evaluation results**

The evaluation results on the test items are shown in Table 3 below.

[Table 3]

| Division | | Hardness | | Mechanical properties | | Migration loss (%) | Volatile loss (%) |
|---|---|---|---|---|---|---|---|
| | | Shore A | Shore D | Tensile strength ($kgf/cm^2$ ) | Elongation rate (%) | | |
| Group 1 | Example 1-1 | 87.8 | 41.3 | 223.5 | 347.2 | 5.93 | 1.35 |
| | Example 1-2 | 86.8 | 40.3 | 226.6 | 347.4 | 5.68 | 1.65 |
| | Example 1-3 | 85.9 | 39.8 | 223.5 | 335.8 | 5.23 | 1.88 |
| | Example 1-4 | 85.0 | 39.0 | 221.7 | 337.2 | 4.66 | 2.01 |
| | Example 1-5 | 83.9 | 38.2 | 216.0 | 312.4 | 4.25 | 3.21 |
| Group 2 | Example 2-1 | 85.7 | 39.8 | 221.3 | 340.2 | 4.77 | 1.56 |
| | Example 2-2 | 85.6 | 39.7 | 223.8 | 339.4 | 4.53 | 1.40 |
| | Example 2-3 | 85.7 | 39.7 | 223.0 | 337.6 | 4.40 | 1.50 |
| | Example 2-4 | 85.4 | 39.5 | 225.6 | 341.0 | 4.22 | 1.23 |
| Comparative Example 1 | | 84.4 | 38.7 | 212.7 | 315.9 | 1.47 | 1.74 |
| Comparative Example 2 | | 87.7 | 41.2 | 220.3 | 325.2 | 2.14 | 0.86 |
| Comparative Example 3 | | 88.6 | 42.0 | 230.4 | 349.6 | 6.51 | 0.91 |
| Comparative Example 4 | | 86.6 | 40.4 | 229.8 | 341.9 | 5.58 | 2.49 |
| Comparative Example 5 | | 77.6 | 34.2 | 204.3 | 301.2 | 4.51 | 7.32 |
| Comparative Example 6 | | 85.2 | 39.2 | 204.6 | 310.2 | 5.20 | 2.41 |
| Comparative Example 7 | | 81.3 | 36.7 | 196.4 | 289.6 | 4.50 | 3.86 |
| Comparative Example 8 | | 80.7 | 36.0 | 192.3 | 265.4 | 4.01 | 5.36 |

Referring to the results of Table 3, it could be confirmed that the plasticizer compositions according to embodiments of the present invention showed the same level of plasticization efficiency in contrast to the conventional plasticizers, and excellent mechanical properties without significant degradation in view of migration loss and volatile loss.

Comparative Example 1 or 2 was the most commonly used plasticizer product in the past, but in the present, is an unserviceable plasticizer due to environmental regulations. However, the plasticizers according to embodiments of the present invention showed similar or better levels of plasticization efficiency when compared to the conventional plasticizers, and it could be confirmed that no problems occurred on performance though the conventional plasticizer is replaced with the plasticizer of the present invention. Though the plasticizer compositions of embodiments of the present invention showed somewhat degraded migration resistance and volatile loss, excellent results of mechanical properties were shown. Considering that the plasticizer compositions of Comparative Examples 1 and 2 are unserviceable due to environmental regulations in the present, it could be confirmed that the plasticizer compositions of the present invention could sufficiently replace the conventional plasticizer products as eco-friendly products. In addition, Comparative Examples 3 and 4 are eco-friendly plasticizers which replace Comparative Examples 1 and 2, and Comparative Example 3 showed similar mechanical properties as the Examples but very inferior migration resistance and plasticization efficiency, and it could be inferred that excellent performance of mechanical properties could not be sufficiently shown. In addition, in the case of Comparative Example 4 in which the di(2-ethylhexyl) terephthalate that was one of the components included in the plasticizer composition of the present invention was used, there were no better one among the

physical properties, and no excellent results were shown overall. In addition, in Comparative Example 5, the dihexyl isophthalate which was a component included in the plasticizer composition of the present invention, was used alone, it could be confirmed that plasticizer efficiency was excellent, but mechanical properties, migration resistance and volatile loss were inferior overall. From this, the exhibition of overall good physical properties, and excellent plasticization efficiency and mechanical properties of the plasticizer composition of the present invention is judged as effects accomplished by the mixing and using of the dihexyl isophthalate and the di(2-ethylhexyl) terephthalate. Comparative Examples 6 and 7 relate to cases of using isophthalate derived from a branch type C6 alcohol alone (Comparative Example 6) and using isophthalate derived from a C4 alcohol (Comparative Example 7) instead of the dihexyl isophthalate used in the compositions of embodiments of the present invention. In the case of Comparative Example 6, the structure of a hexyl group included in the dihexyl isophthalate was not diverse, and mechanical properties were degraded, and in the case of Comparative Example 7, the carbon number of an alkyl group bonded to isophthalate was small, and mechanical properties were degraded even further in contrast to Comparative Example 6, and it could be confirmed that volatile loss was also markedly degraded. Accordingly, from the results, it could be found that the derivation of the alkyl group of the dihexyl isophthalate included in the embodiments of the present invention from the isomer mixture of hexyl alcohol was contributory to the excellent effects of the plasticizer compositions of the present invention.

Finally, Comparative Example 8 is a case where diheptyl terephthalate was used instead of the di(2-ethylhexyl) terephthalate used in the compositions of the embodiments of the present invention, and it could be confirmed that Comparative Example 8 also showed inferior mechanical properties and volatile loss. From the results, it could be found that the effects accomplished by the plasticizer composition of the present invention could be accomplished according to the particular types of the components included in the plasticizer composition and the weight ratios among them.

**Experimental Example 2: Evaluation of plastisol performance**

By using the plasticizers of the Examples and the Comparative Examples, specimens were manufactured according to ASTM D638 and the prescription and manufacturing conditions below.

**(1) Prescription:** 100 parts by weight of a paste vinyl chloride polymer (KH-10), 60 parts by weight of a plasticizer and 3 parts by weight of a stabilizer (CZ400)
**(2) Mixing:** mixing in 1000 rpm for 15 minutes
**(3) Manufacture of specimen:** The plastisol thus mixed was spread to a thickness of 0.3 mm and cured using an oven at 230°C for 2 minutes to manufacture a specimen
**(4) Test item**

1) Viscosity: Measurement was conducted using a Brookfield (LV type) viscometer as Brookfield viscosity, #64 was used as a spindle, a measurement rate was 6 rpm and 60 rpm, and a measurement temperature was 25°C.

**(5) Evaluation results**

The evaluation results on the test items are shown in Table 4 below.

[Table 4]

| Division | | 6 rpm/25°C viscosity (cP) | | 60 rpm/25°C viscosity (cP) | |
|---|---|---|---|---|---|
| | | 1hr | 24hr | 1hr | 24hr |
| Group 1 | Example 1-1 | 3000 | 2800 | 1990 | 1960 |
| | Example 1-2 | 2300 | 3300 | 1870 | 2080 |
| | Example 1-3 | 2100 | 3400 | 1850 | 2200 |
| | Example 1-4 | 1900 | 3600 | 1760 | 2360 |
| | Example 1-5 | 1800 | 4200 | 1720 | 2790 |
| Group 2 | Example 2-1 | 2050 | 3300 | 1800 | 2150 |
| | Example 2-2 | 2000 | 3250 | 1810 | 2100 |
| | Example 2-3 | 2100 | 3200 | 1780 | 2100 |
| | Example 2-4 | 2000 | 3200 | 1750 | 2030 |
| Comparative Example 1 | | 3200 | 4100 | 2410 | 2830 |

(continued)

| Division | 6 rpm/25°C viscosity (cP) | | 60 rpm/25°C viscosity (cP) | |
|---|---|---|---|---|
| | 1hr | 24hr | 1hr | 24hr |
| Comparative Example 2 | 3100 | 3000 | 2260 | 2470 |
| Comparative Example 3 | 2900 | 3600 | 1960 | 2290 |
| Comparative Example 5 | 1000 | 4300 | 1100 | 4350 |
| Comparative Example 6 | 1950 | 3700 | 1800 | 2450 |
| Comparative Example 7 | 1400 | 4500 | 1420 | 3860 |
| Comparative Example 8 | 1100 | 4400 | 1150 | 4500 |

Referring to Table 4, it could be confirmed that if the plasticizer compositions of embodiments were applied, initial viscosity was low, and a viscosity change ratio was not large as well, and from the results, it could be confirmed that the plasticizer composition of the present invention could completely replace the conventional plasticizer and used in a plastisol processing.

## Claims

1. A plasticizer composition comprising dihexyl isophthalate and di(2-ethylhexyl) terephthalate, wherein

   a hexyl group of the dihexyl isophthalate is derived from an isomer mixture of hexyl alcohol, and
   the isomer mixture of hexyl alcohol comprises two or more selected from the group consisting of 1-hexanol, 1-methylpentanol, 2-methylpentanol, 3-methylpentanol, 4-methylpentanol, 1,1-dimethylbutanol, 1,2-dimethylbutanol, 1,3-dimethylbutanol, 2,2-dimethylbutanol, 2,3-dimethylbutanol, 3,3-dimethylbutanol, 1-ethylbutanol, 2-ethylbutanol, 3-ethylbutanol and cyclopentyl methanol.

2. The plasticizer composition according to claim 1, wherein the isomer mixture of hexyl alcohol comprises 1-hexanol and 2-methylpentanol.

3. The plasticizer composition according to claim 1, wherein the isomer mixture of hexyl alcohol comprises 40 parts by weight or more of a branch type alcohol based on 100 parts by weight of the isomer mixture.

4. The plasticizer composition according to claim 1, wherein the isomer mixture of hexyl alcohol comprises 50 to 95 parts by weight of a branch type alcohol based on 100 parts by weight of the isomer mixture.

5. The plasticizer composition according to claim 1, wherein the isomer mixture of hexyl alcohol comprises 40 parts by weight or less of 1-hexanol based on 100 parts by weight of the isomer mixture.

6. The plasticizer composition according to claim 1, wherein a weight ratio of the dihexyl isophthalate and the di(2-ethylhexyl) terephthalate is 90:10 to 10:90.

7. The plasticizer composition according to claim 1, wherein the isomer mixture of hexyl alcohol comprises 1-hexanol, 2-methylpentanol and 3-methylpentanol.

8. A resin composition comprising: 100 parts by weight of a resin; and 5 to 150 parts by weight of the plasticizer composition of claim 1, wherein the resin is one or more selected from the group consisting of a straight vinyl chloride polymer and a paste vinyl chloride polymer.

## Patentansprüche

1. Weichmacherzusammensetzung, umfassend Dihexylisophthalat und Di(2-ethylhexyl)terephthalat, wobei

   eine Hexylgruppe des Dihexylisophthalats von einer Isomerenmischung von Hexylalkohol abgeleitet ist, und

die Isomerenmischung von Hexylalkohol zwei oder mehr umfasst, ausgewählt aus der Gruppe, bestehend aus 1-Hexanol, 1-Methylpentanol, 2-Methylpentanol, 3-Methylpentanol, 4-Methylpentanol, 1,1-Dimethylbutanol, 1,2-Dimethylbutanol, 1,3-Dimethylbutanol, 2,2-Dimethylbutanol, 2,3-Dimethylbutanol, 3,3-Dimethylbutanol, 1-Ethylbutanol, 2-Ethylbutanol, 3-Ethylbutanol und Cyclopentylmethanol.

**2.** Weichmacherzusammensetzung nach Anspruch 1, wobei die Isomerenmischung von Hexylalkohol 1-Hexanol und 2-Methylpentanol umfasst.

**3.** Weichmacherzusammensetzung nach Anspruch 1, wobei die Isomerenmischung von Hexylalkohol 40 Gewichtsteile oder mehr eines Alkohols vom verzweigten Typ, bezogen auf 100 Gewichtsteile der Isomerenmischung, umfasst.

**4.** Weichmacherzusammensetzung nach Anspruch 1, wobei die Isomerenmischung von Hexylalkohol 50 bis 95 Gewichtsteile eines Alkohols vom verzweigten Typ, bezogen auf 100 Gewichtsteile der Isomerenmischung, umfasst.

**5.** Weichmacherzusammensetzung nach Anspruch 1, wobei die Isomerenmischung von Hexylalkohol 40 Gewichtsteile oder weniger 1-Hexanol, bezogen auf 100 Gewichtsteile der Isomerenmischung, umfasst.

**6.** Weichmacherzusammensetzung nach Anspruch 1, wobei ein Gewichtsverhältnis des Dihexylisophthalats und des Di(2-ethylhexyl)terephthalats 90:10 bis 10:90 beträgt.

**7.** Weichmacherzusammensetzung nach Anspruch 1, wobei die Isomerenmischung von Hexylalkohol 1-Hexanol, 2-Methylpentanol und 3-Methylpentanol umfasst.

**8.** Harzzusammensetzung, umfassend: 100 Gewichtsteile eines Harzes; und 5 bis 150 Gewichtsteile der Weichmacherzusammensetzung nach Anspruch 1, wobei das Harz eines oder mehrere ist, ausgewählt aus der Gruppe, bestehend aus einem geradkettigen Vinylchloridpolymer und einem pastenförmigen Vinylchloridpolymer.

## Revendications

**1.** Composition de plastifiant comprenant un isophtalate de dihexyle et un téréphtalate de di(2-éthylhexyle), dans laquelle

un groupe hexyle de l'isophtalate de dihexyle est dérivé d'un mélange isomère d'alcool hexylique, et
le mélange isomère d'alcool hexylique comprend deux éléments ou plus sélectionnés dans le groupe constitué de 1-hexanol, 1-méthylpentanol, 2-méthylpentanol, 3-méthylpentanol, 4-méthylpentanol, 1,1-diméthylbutanol, 1,2-diméthylbutanol, 1,3-diméthylbutanol, 2,2-diméthylbutanol, 2,3-diméthylbutanol, 3,3-diméthylbutanol, 1-éthylbutanol, 2-éthylbutanol, 3-éthylbutanol et cyclopentylméthanol.

**2.** Composition de plastifiant selon la revendication 1, dans laquelle le mélange isomère d'alcool hexylique comprend 1-hexanol et 2-méthylpentanol.

**3.** Composition de plastifiant selon la revendication 1, dans laquelle le mélange isomère d'alcool hexylique comprend 40 parties en poids ou plus d'un alcool de type ramifié sur la base de 100 parties en poids du mélange isomère.

**4.** Composition de plastifiant selon la revendication 1, dans laquelle le mélange isomère d'alcool hexylique comprend 50 à 95 parties en poids d'un alcool de type ramifié sur la base de 100 parties en poids du mélange isomère.

**5.** Composition de plastifiant selon la revendication 1, dans laquelle le mélange isomère d'alcool hexylique comprend 40 parties en poids ou moins de 1-hexanol sur la base de 100 parties en poids du mélange isomère.

**6.** Composition de plastifiant selon la revendication 1, dans laquelle un rapport en poids de l'isophtalate de dihexyle et du téréphtalate de di(2-éthylhexyle) est 90:10 à 10:90.

**7.** Composition de plastifiant selon la revendication 1, dans laquelle le mélange isomère d'alcool hexylique comprend 1-hexanol, 2-méthylpentanol et 3-méthylpentanol.

**8.** Composition de résine comprenant : 100 parties en poids d'une résine ; et 5 à 150 parties en poids de la composition

de plastifiant selon la revendication 1, dans laquelle la résine est un ou plusieurs éléments sélectionnés dans le groupe constitué d'un polymère de chlorure de vinyle droit et d'un polymère de chlorure de vinyle en pâte.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0388197 A1
- WO 2020222500 A1
- KR 20160101880 A
- KR 20200127890 A
- KR 20180042308 A
- KR 20160079065 A
- KR 20140126648 A